# EUROPEAN PATENT APPLICATION

(11) **EP 1 677 176 A1**
(43) Date of publication of application: **05.07.2006**
(21) Application number: 05025927.4
(22) Date of filing: 28.11.2005
(51) Int. Cl.: G06F 3/023

(54) **Character input device**

(30) Priority: 28.12.2004 JP 2004380684
(71) Applicant: Brother Kogyo Kabushiki Kaisha, Nagoya-shi, Aichi-ken 467-8561 (JP)
(72) Inventor: Ishida, Minako c/o Technology Planning & IP Dept., Nagoya-shi Aichi-ken 467-8562 (JP); Muto, Naruhito c/o Technology Planning & IP Dept., Nagoya-shi Aichi-ken 467-8562 (JP); Yoshimura, Nako c/o Technology Planning & IP Dept., Nagoya-shi Aichi-ken 467-8562 (JP)
(74) Representative: Hofer, Dorothea

(57) **Abstract**

When accented characters exist in a preset language, a priority accented character selection table (61) is created for input of a required accented character so as to define that the accented characters available for the preset language are displayed with higher priority than other accented characters. Based on the created priority accented character selection table (61), the candidates of accented characters are displayed in turn on an LCD (5). Thus, quick and easy input of accented characters can be achieved.

## Description

### BACKGROUND OF THE INVENTION

### 1. Field of the Invention

The present invention relates to a text input device which displays accented characters having accent marks for allowing selection of a required accented character. More particularly, the present invention relates to a character input device which allows selection of a desired language from among languages of a plurality of countries and display of accented characters relevant to the set language by giving a higher priority to them than other accented characters irrelevant to the set languages, thereby enabling quick and easy input of required accented characters.

### 2. Description of Related Art

Heretofore, various types of character input devices have been proposed, which allow input of accented characters having accent marks such as an umlaut ["] and an acute accent [']. Some national languages (e.g., French, German, Spanish) use different accented characters. A character input device adapted to input characters in the languages of the plurality of countries has adopted the following methods to input respective accented characters. Specifically, one of the methods is to input a required accented character by displaying all accented characters used in the languages as candidates every time, regardless of a set language. Another is to input a required accented character by providing character tables in the number of languages and displaying only the candidates of the accented characters relevant to a set language.

For instance, Japanese patent application laid-open No. 5(1993)-12287 discloses a text processing device that includes memory means which stores candidate information about the above accent marks different by languages of the plurality of countries so that the accent marks may be searched country by country. To display the candidates of accent marks, the device is structured such that control means retrieves candidate data corresponding to the relevant country from candidate data on the accents in the memory means according to a national code previously input with operation input means and then causes display means to display such retrieved data. This device does not display the accent candidates unused in the set language, thereby reducing a burden which may be imposed on an operator in selecting a required accent.

In the text processing device disclosed in JP 5(1993)-12287A mentioned above, however, after selection of the language, only the accented characters relevant to the set language could be input. In the case where a German language has been selected as a set language, for instance, if a user desires to input an accented character in a French language, he/she has to select a language again to change from German to French and then input the accented character in French. In Europe, particularly, plural languages are often used in one region or country. Hence, the text processing device disclosed in JP 5(1993)-12287A would cause a problem that the above mentioned troublesome operation is needed in inputting characters in each language.

On the other hand, in a text processing device structured to always display all the accented characters used in every language every time regardless of the set language, even accented characters unused in the set language are also displayed as the candidates. In general, text is likely to be input in the same language every time. If the characters which are hardly used in the set language are also displayed regularly as the candidates, character input operations may be troublesome and it would take long to input text, causing a decrease in operating efficiency.

### SUMMARY OF THE INVENTION

The present invention has been made in view of the above circumstances and has an object to overcome the above problems and to provide a character input device capable of quickly and easily inputting accented characters in a plurality of languages by displaying accented characters relevant to a set language as a candidate for input while giving them a higher priority than other accented characters irrelevant to the set language.

Additional objects and advantages of the invention will be set forth in part in the description which follows and in part will be obvious from the description, or may be learned by practice of the invention. The objects and advantages of the invention may be realized and attained by means of the instrumentalities and combinations particularly pointed out in the appended claims.

Such objects are achieved in accordance with a character input device comprising the features of claim 1. Specifically, a character input device comprises: a plurality of character keys for inputting characters; a display screen for displaying the characters input with the character keys; accented character display means for displaying an accented character having an accent mark on the display screen; and character selection means for selecting a required accented character from the accented character(s) displayed by the accented character display means; characterized in that the character input device further comprises: character storage means for storing accented characters used in languages of a plurality of countries; and language selection means for selecting a required language from the languages; and the accented character display means displays an accented character relevant to the selected language by the language selection means, with higher priority than other accented characters stored in the character storage means.

According to the above structured character input device, among the accented characters stored in the character storage means, the accented characters relevant to a set language are displayed with higher priority than other accented characters. Thus, this device allows a user to input the accented characters in a plurality of languages and quickly select the frequently-used accented characters. Consequently, it is possible to ensure versatility of the device with respect to the types of languages and enable quick and easy input of accented characters.

Further developments of the present invention are given in the dependent claims.

### BRIEF DESCRIPTION OF THE DRAWINGS

The accompanying drawings, which are incorporated in and constitute a part of this specification illustrate an embodiment of the invention and, together with the description, serve to explain the objects, advantages and principles of the invention.

In the drawings,
Fig. 1 is a schematic perspective view of a tape printer in an embodiment;
Fig. 2 is a front view of a tape printer in the embodiment;
Fig. 3 is a perspective back view of the tape printer with a back cover being detached therefrom and a tape cassette being set therein;
Fig. 4 is a block diagram of a control system of the tape printer;
Fig. 5 is one example of a standard accented character selection table (1) stored in a standard table storage area of the tape printer;
Fig. 6 is another example of a standard accented character selection table (2) stored in the standard table storage area of the tape printer;
Fig. 7 is an explanatory view showing an example for creating a priority accented character selection table in the tape printer;
Fig. 8 is a list of accented characters used in each language for a base letter "A";
Fig. 9 is a list of tables to be used for each language to display candidates of accented characters for the base letter "A";
Fig. 10 is a list of accented characters used in each language for a base letter "I";
Fig. 11 is a list of tables to be used for each language to display candidates of accented characters for the base letter "I";
Fig. 12 is a flowchart of a main system control program in the tape printer in the present embodiment;
Fig. 13 is a flowchart of a language setting processing program in the tape printer in the present embodiment;
Fig. 14 is a flowchart of an accented character input processing program in the tape printer in the present embodiment;
Fig. 15 is an explanatory view showing one example of a display screen of a liquid crystal display, which is executed in accordance with the language setting processing program in the tape printer; and
Fig. 16 is an explanatory view showing one example of a display screen of the liquid crystal display, which is executed in accordance with the accented character input processing program in the tape printer.

### DETAILED DESCRIPTION OF THE PREFERRED EMBODIMENTS

A detailed description of a preferred embodiment of a character input device embodying the present invention will now be given referring to the accompanying drawings. In the present embodiment, the character input device is built in a tape printer. Herein, the tape printer 1 in the present embodiment is capable of inputting "accented characters" having accent marks (e.g., umlaut [··] and acute accent [']) used in each language in addition to "base letters" including standard alphabets having no accent marks. Further, the language a user uses for input can be selected in advance. This makes it possible for the user to input the accented characters used in each language and easily input the accented characters relevant to the set language.

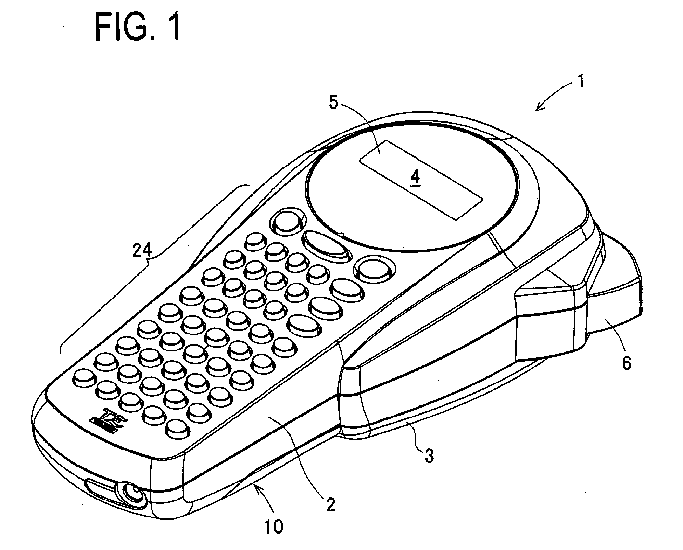

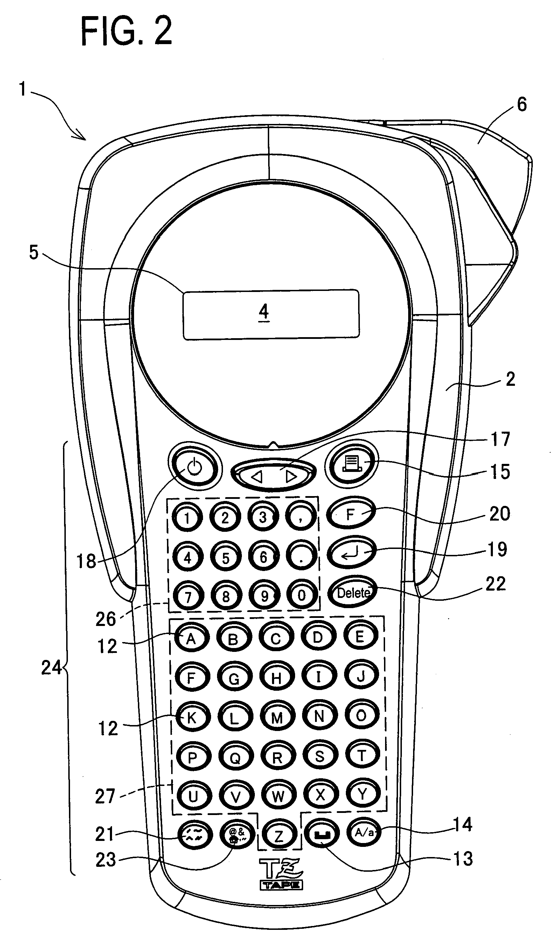

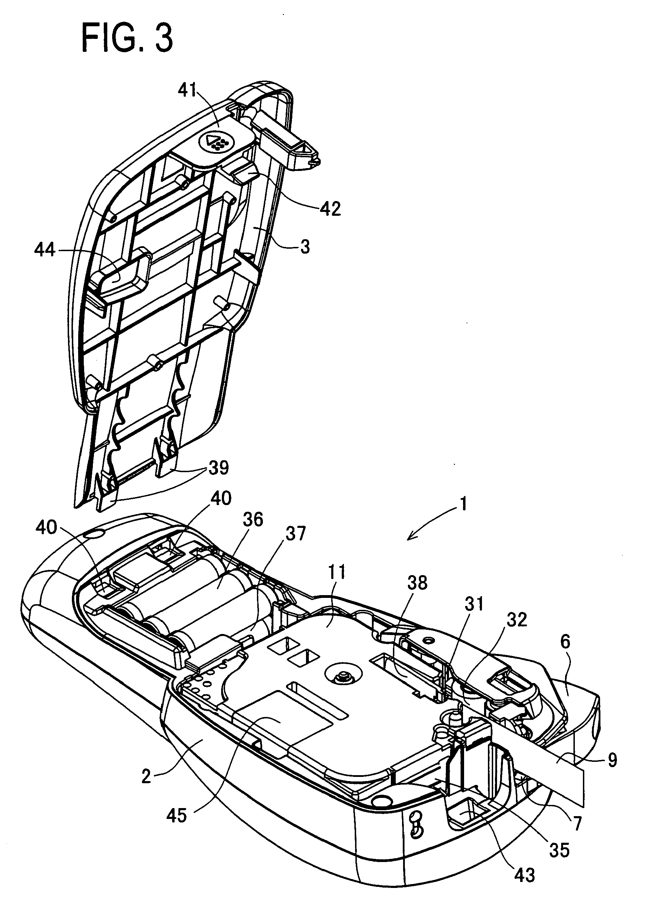

A schematic structure of the tape printer 1 in the present embodiment will be explained below with reference to Figs. 1 through 3. Fig. 1 is a schematic perspective view of the tape printer 1. Fig. 2 is a front view of the tape printer 1. Fig. 3 is a perspective back view of the tape printer 1 with a back cover being detached therefrom and a tape cassette being set therein.

As shown in Figs. 1 and 2, the tape printer 1 includes a main body 2 made of synthetic resin, and a back cover 3 made of synthetic resin, detachably attached to the main body 2 to cover the entire back thereof (the opposite face to the front face which will face a user (operator) during use of the tape printer 1). The upper half part of the main body 2 in a longitudinal direction thereof has a slightly rounded outer shape in front view as shown in Fig. 2. The front face of the upper half part of the main body 2 is centrally formed with a rectangular window which is long sideways in a right-and-left direction in Fig. 2. Placed under this window 4 is a liquid crystal display (LCD) 5. The main body 2 is further provided with a cutter lever 6 on the upper right side in Fig. 2. Upon pressure of the cutter lever 6 by e.g., a thumb of the user, a printed tape 9 discharged through a tape discharge port 7 (see Fig. 3) provided at the top of the tape printer 1 is cut by a cutting blade (not shown).

The lower half part of the main body 2 in the longitudinal direction has a width slightly smaller than that of the upper half part and a right and left side faces having curved edges. This lower half part constitutes a holding part 10. The back cover 3 similarly has right and left side faces having curved edges to provide, in combination with the curved edges of the main body 2, a smoothly curved surface for the holding part 10. Further, the back cover 3 attached to the main body 2 is designed so that the tape printer 1 is gradually smaller in thickness from the upper half part internally holding a tape cassette 11 (see Fig. 3) to the lower half part, i.e., the holding part 10. Thus, the thickness of the holding part 10 is smaller than the thickness of the upper half part to allow a user to easily hold the tape printer 1 by hand.

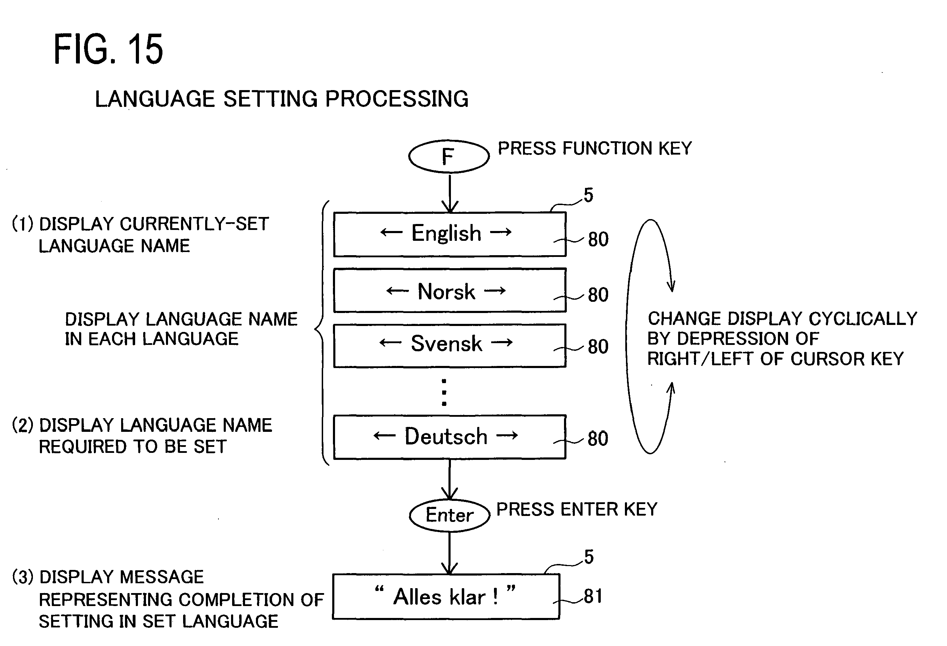

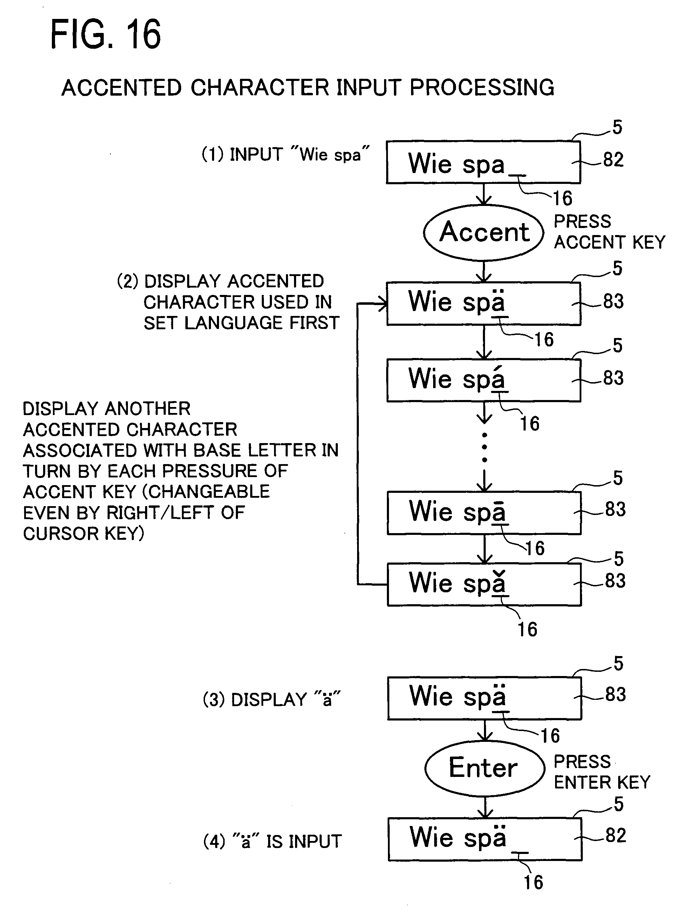

In the holding part 10, on the front surface thereof, there is provided a keyboard 24 with a plurality of keys made of elastic material, e.g., silicone rubber. Specifically, the keyboard 24 includes character keys 12 for creating a text including character data, a space key 13 for inputting a space, a Caps key 14 for shifting between upper and lower cases every time the key 14 is pressed, a print key 15 for commanding print of the text, a cursor key 17 for changing set languages and accented characters on the LCD 5 (see Figs. 15 and 16) which displays characters such as letters and others, a power switch 18 for turning power ON/OFF, an enter key 19 for commanding selection of a character or other operation, a function key 20 for calling up an appropriate screen for selecting a function of changing the set language, which will be mentioned later, and other functions, an accent key 21 for inputting accented characters having accent marks, for example, an umlaut [^{..}], an acute accent ['], etc. available at input of French, German, or other languages, a Delete key 22 for deleting one of the input characters displayed on the LCD 5, the one being immediately preceding a character on which a cursor 16 (see Fig. 16) is directly placed, and a symbol key 23 for inputting a special symbol such as "@", "%", etc. A method of inputting accented characters with the accent key 21 will be explained later in detail.

The character keys 12 mainly consist of a numeral key group 26 and an alphabet key group 27. The numeral key group 26 includes keys for inputting numerals "0" to "9", arranged closer to the LCD 5. The alphabet key group 27 includes keys for inputting alphabets "A" to "Z", arranged closer to the holding part 10. When each key is pressed down, an alphabet or numeral corresponding to a key-top legend on the pressed key is displayed on the LCD 5 and input.

The tape printer 1 in the present embodiment is structured to allow the user to select a language to be used by the function key 20. The language is selectable from fourteen languages; "English", "Norwegian", "Swedish", "Danish", "Finnish", "Spanish", "Portuguese", "German", "French", "Dutch", "Italian", "Czech", "Hungarian", and "Polish". In inputting an accented character, available accented characters are displayed as a candidate on the LCD 5 in a predetermined order which is changed according to the set language, which will be mentioned later.

The main body 2 is provided, inside the holding part 10, with a circuit board 29 on which the keyboard 24 including the above mentioned keys is disposed. The main body 2 is further provided, between the holding part 10 and the LCD 5, a control board (not shown) on which a control circuit is formed. Further, a drive motor (not shown) for driving and rotating a platen roller 32 (see Fig. 3) is placed in the main body 2, on the opposite side of the control board to a thermal head 31 and also on the upper side in the longitudinal direction of the main body 2. This platen roller 32 serves as tape feeding means which feeds tape through a gear train not shown.

The main body 2 is further provided, in a section behind the boards, the LCD 5, and the drive motor and others, with a cassette storage part 35 for housing the tape cassette 11 and a battery storage part 37 for housing a dry battery 36.

The cassette storage part 35 is of a substantially rectangular shape in plan view corresponding to the outer shape of the tape cassette 11 and is concave with a depth substantially equal to the thickness of the tape cassette 11. In the cassette storage part 35, on the bottom near the edge close to the cutter lever 6, a thermal head mounting part 38 formed of a thin plate is vertically provided at a right angle with the bottom and in a predetermined length along the longitudinal direction of the main body 2. The thermal head 31 is attached to the thermal head mounting part 38. The thermal head 31 is provided with a plurality of heating elements (not shown) arranged in line for printing characters such as letters on the printing tape 9 through a printing ribbon (not shown).

The back cover 3 is attached to the main body 2 in the following manner. First insert parts (lugs) 39 formed at the edge of the back cover 3 on the holding part 10 side are first inserted in grooves 40 formed in the main body 2. Then, a hook 42 of a second insert part 41 provided on the opposite side to the first insert parts 39 is engaged in a recess 43 of the main body 2 to tightly attach the back cover 3 to the main body 2. To detach the back cover 3 from this state, on the other hand, a user has only to push the second insert part 41 inward, thereby disengaging the hook 42 from the recess 43. Thus, the back cover 3 can easily be detached from the main body 2. After the back cover 3 is detached, the tape cassette 11 can be taken out of the cassette storage part 35. Similarly, the dry batteries 36 in the battery storage part 37 can be taken out or replaced sequentially with new ones.

The back cover 3 is further provided with a window 44 for confirmation of the tape cassette 11. Through this window 44 of the back cover 3 attached to the main body 2, a user can see a cassette label 45 on which the kind of the tape cassette 11 is printed. Accordingly, the user can visually confirm the kind of the tape cassette 11 stored in the cassette storage part 35 without opening (detaching) the back cover 3.

Furthermore, on the bottom of the cassette storage part 35, a plurality of detection switches (seven switches in the present embodiment) are arranged. These detection switches are selectively turned on/off through a plurality (seven in combination in the present embodiment) of projections and depressions (not shown) provided on the bottom surface of the tape cassette 11. The tape cassette 11 may have the projections and depressions either singly or in combination. Based on a detection result thereon, the type of the tape cassette can be detected.

The tape cassette 11 contains the printing tape 9 and a printing ribbon. The type of the tape cassette 11 usable in the tape printer 1 in the present embodiment is identified by a combination of the printing tape 9 and the printing ribbon contained in the tape cassette 11. In the present embodiment, there are six usable tape widths; 6 mm, 9 mm, 12 mm, 18 mm, 24 mm, and 36 mm and two usable tape types; laminated tape and non-laminated tape.

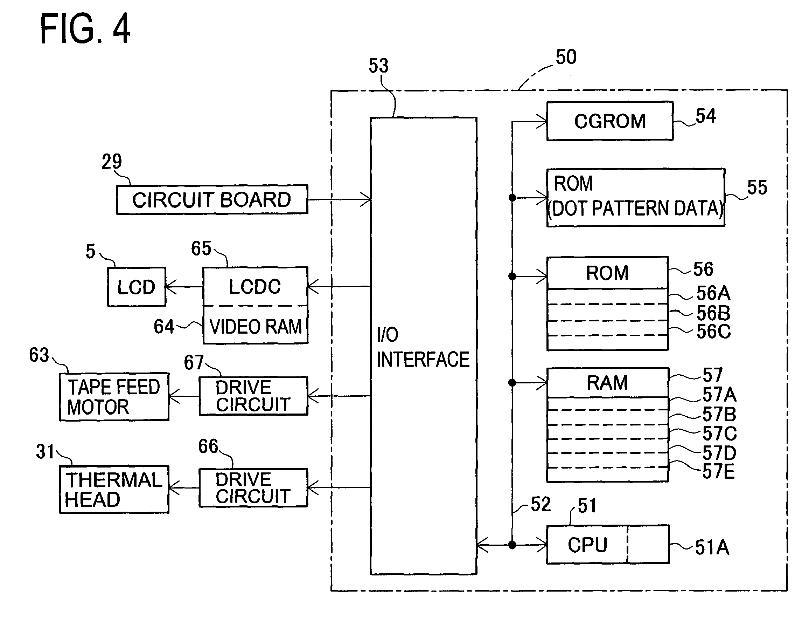

Next, a control system of the tape printer 1 structured as above will be explained with reference to Fig. 4. As shown in Fig. 4, the control structure of the tape printer 1 is configured around a control circuit 50 formed on a control circuit board not shown. The control circuit 50 includes a CPU 51 for controlling each device and other elements connected to this CPU 51 through a data bus 52, namely, an input/output interface 53, a CGROM 54, ROMs 55 and 56, and a RAM 57. The CPU 51 is internally provided with a timer 51A.

Herein, the CGROM 54 stores dot pattern data for display in relation to each of a large number of characters, the data being assigned code data.

The ROM (dot pattern data memory) 55 stores dot pattern data for printing in relation to each of a large number of characters to print characters such as alphabets (including base letters and accented characters) and symbols. The stored printing dot pattern data is classified according to fonts (Gothic type font, Arial type font, etc.) and assigned code data corresponding to five print character sizes (16, 24, 32, 47, and 64 dots) for each font. Further, the ROM 55 also stores graphic pattern data for printing graphic characters such as boldface characters, outline characters on a colored background, italic characters, and shaded characters.

The ROM 56 includes an initial changing order storage area 56A in which an initial changing order is stored to change a character size between uppercase characters and lowercase characters when the Caps key 14 is pressed for the first time after startup of the tape printer 1. In the present embodiment, the character size is changed in the order of "alphabet uppercase character" → "alphabet lowercase character" → "alphabet uppercase character" → ... .

The ROM 56 further includes a standard table storage area 56B in which a standard accented character selection table 60 is stored. This standard accented character selection table 60 is used in displaying candidates of accented characters associated with a base letter when the accent key 21 is pressed following input of the base letter with the character key 12 as mentioned later. This table 60 is used either if the language currently selected as a set language in the tape printer 1 is "English" which uses no accented character or if the set language has no accented character associated with the base letter input just before pressing of the accent key 21 even where the set language uses accented characters. If the set language uses accented characters and also includes accented characters associated with the just input base letter, a priority accented character selection table 61 which is created in the RAM 57 mentioned later is used to display candidates of accented characters.

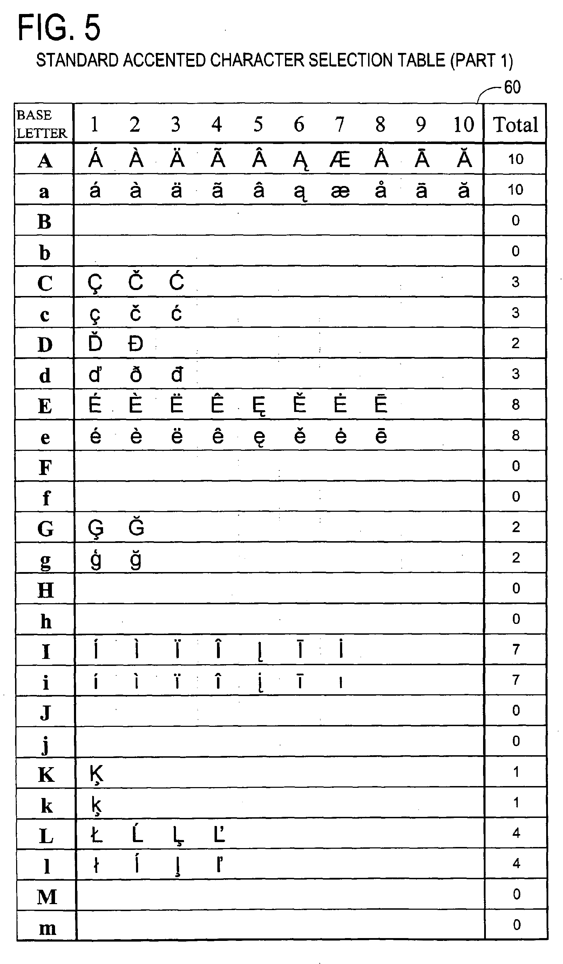

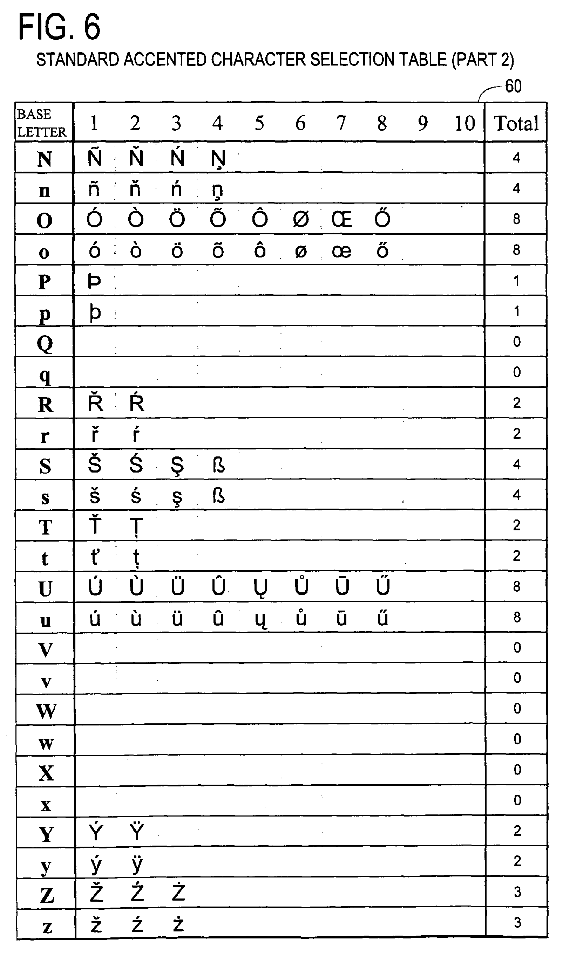

In the tape printer 1 in the present embodiment, accented characters relevant to many national languages used in European countries are stored. Every time the accent key 21 is pressed, the accented characters associated with the base letter input just before the pressing of the accent key 21 are displayed one by one on the LCD 5 in accordance with the standard accented character selection table 60 or priority accented character selection table 61. The accented characters stored in the present embodiment are 143 accented characters in total including all accented characters used in 13 languages other than "English" using no accented character, of 14 languages selectable in the tape printer 1 (see Figs. 5 and 6). Specifically, these 13 languages are "Norwegian", "Swedish", "Danish", "Finnish", "Spanish", "Portuguese", "German", "French", "Dutch", "Italian", "Czech", "Hungarian", and "Polish". The standard accented character selection table 60 will be explained later in detail.

The ROM 56 stores a priority accented character storage area 56C, in which accented characters used in each language are specified from among all the stored accented characters. When the accent key 21 is pressed as will be mentioned later and also the currently-set language includes accented characters associated with a base letter input just before pressing of the accent key 21, the priority accented character selection table 61 which defines a list of candidates of accented characters in a new displaying order by giving a higher priority to the accented characters used in the currently-set language than others is created based on the standard accented character selection table 60 and the accented characters specified in the priority accented character storage area 56C. Thus, the candidates of accented characters are displayed one by one.

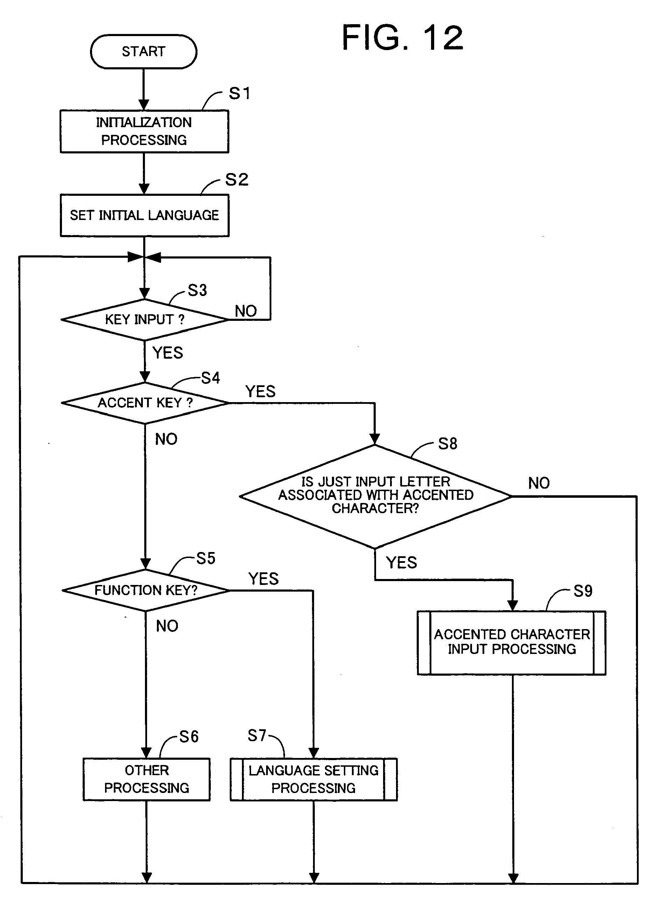

Further, the ROM 56 stores a displaying drive control program to control the LCD 5 in association with the code data on the characters such as letters and numerals input with the character keys 12; a printing drive control program to drive the thermal head 31 and the platen roller 32 by reading data from a printing buffer 57B; a pulse number determination program to determine the number of pulses corresponding to the amount of energy which forms each print dot; each control program for language setting processing and accented character input processing which will be mentioned later (see Figs. 12 to 14); a drive control program to drive and feed printed tape to a cutting place after completion of printing; and other various kinds of programs needed for control of the tape printer 1. The CPU 51 performs various calculations based on the various kinds of programs and data stored in the ROM 56.

The RAM 57 includes a text memory 57A, a printing buffer 57B, a counter 57C, a set language storage area 57D, and a priority table creation area 57E. Specifically, identification information is stored in the set language storage area 57D to identify the currently-set language from among 14 languages selectable in the tape printer 1. In the priority table creation area 57E, the priority accented character selection table 61 to be used for displaying the candidates of accented characters is created when the accent key 21 is pressed and also the currently-set language includes the accented characters associated with the base letter input just before the pressing of the accent key 21. The text memory 57A stores text data input with the character keys 12, the accent key 21, and the symbol key 23. Stored as dot pattern data in the printing buffer 57B are the printing dot patterns such as a plurality of letters and symbols and the number of pulses to be applied corresponding to the amount of energy for forming each dot. The thermal head 31 performs dot printing in accordance with the dot pattern data stored in the above printing buffer 57B.

In the counter 57C, a count value corresponding to the number of times that the accent key 21 has been pressed is stored. In the set language storage area 57D, further, a language identification code for specifying the type of currently-set language is stored. Stored in the priority table creation area 57E is the priority accented character selection table 61 that is created based on the standard accented character selection table 60 and the accented characters specified in the priority accented character storage area 56C and that defines a list of available accented characters in the new displaying order by giving a higher priority to the accented characters used in the currently-set language than others. The RAM 57, excluding the set language storage area 57D, is initialized on startup (S1 in Fig. 12). In other words, electric power supply to the RAM 57 is not completely stopped even where the power switch 18 is turned off, so that the RAM 57 backs up the stored data.

The I/O interface 53 is connected with the circuit board 29, a display controller (hereinafter, LCDC) 65 having a video RAM 64 for outputting display data on the LCD 5, a drive circuit 66 for driving the thermal head 31, and a drive circuit 67 for driving a tape feed motor 63, respectively.

Accordingly, when letters and others are input with the character keys 12, the accent key 21, and the symbol key 23, which are connected with the circuit board 29, the text (document data) corresponding to the input letters and others is stored in sequence in the text memory 57A. Simultaneously, the LCD 5 displays the dot pattern corresponding to the letters and others input through the circuit board 29 based on the dot pattern generation control program and the displaying control program. The thermal head 31 is driven through the drive circuit 66 to print on the printing tape 19 based on the dot pattern data stored in the printing buffer 57B. In sync with operation of the thermal head 31, the tape feed motor 63 is controlled through the drive circuit 67 to feed tape.

Next, the standard accented character selection table 60 stored in the standard table storage area 56B will be explained with reference to Figs. 5 and 6.

As shown in Figs. 5 and 6, the standard accented character selection table 60 is constituted of alphabets used as base letters and a plurality of candidates of accented characters associated with each of the alphabets. As with alphabets, the accented characters includes uppercase letters and lowercase letters. Fig. 5 shows a standard accented character selection table of accented characters associated with base letters A to m. Fig. 6 is another standard accented character selection table of accented characters associated with base letters N to z.

The accented characters defined in the standard accented character selection table 60 include all accented characters used in 13 languages other than "English" using no accented character, of 14 languages available in the tape printer 1. Specifically, these 13 languages are "Norwegian", "Swedish", "Danish", "Finnish", "Spanish", "Portuguese", "German", "French", "Dutch", "Italian", "Czech", "Hungarian", and "Polish". The number of accented characters associated with each base letter is different depending on the types of the base letters. For example, the accented characters associated with the base letter "A" include 10 types of "A with acute accent", "A with grave accent", "A with umlaut",......, starting from the left in the standard accented character selection table 60 as shown in Fig. 5. The accented characters associated with the base letter "Y" include 2 types of "acute accent Y" and "umlaut Y" as shown in Fig. 6. In addition, base letters associated with no accented character are 18 letters, that is, "B", "F", "H", "J", "M", "Q", "V", "W", "X", "b", "f", "h", "j", "m", "q", "v", "w", and "x". Even where the accent key 21 is pressed following input of one of these base letters, no accented character candidate is displayed (see S8 in Fig. 12).

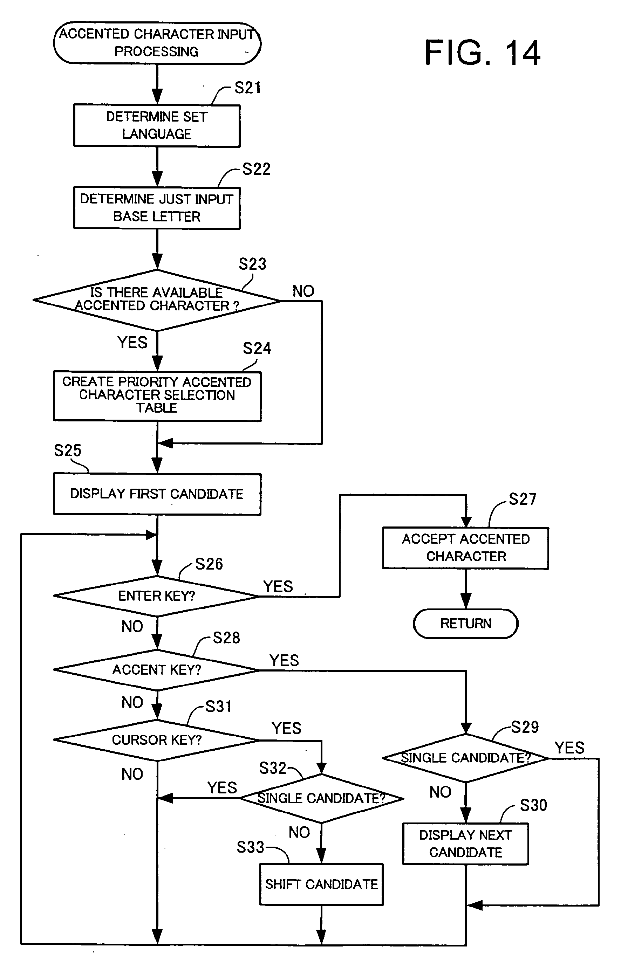

The standard accented character selection table 60 shows the order of selection (or display on the LCD 5) of accented characters, which is defined in advance to allow accented characters to appear one by one every time the accent key 21 or cursor key 17 is pressed. To be concrete, the selection order is defined such that the leftmost accented character in the standard accented character selection table 60 shown in Figs. 5 and 6 is displayed first (see S25 in Fig. 14), and then subsequent accented characters listed on the right are sequentially displayed every pressing of the accent key 21 or the right portion of cursor key 17; e.g. in the order of "A with acute accent" → "A with grave accent" → "A with umlaut"... The selection order is also defined such that when the left portion of cursor key 17 is pressed, the accented character first displayed is the same but the subsequent accented characters are displayed one by one in the reverse order.

The priority accented character selection table 61, which is created when the accent key 21 is pressed and also the currently-set language includes accented characters associated with the base letter input just before the pressing of the accent key 21, is defined as mentioned later to display the accented characters used in the currently-set language with higher priority than others based on the order defined in the above standard accented character selection table 60.

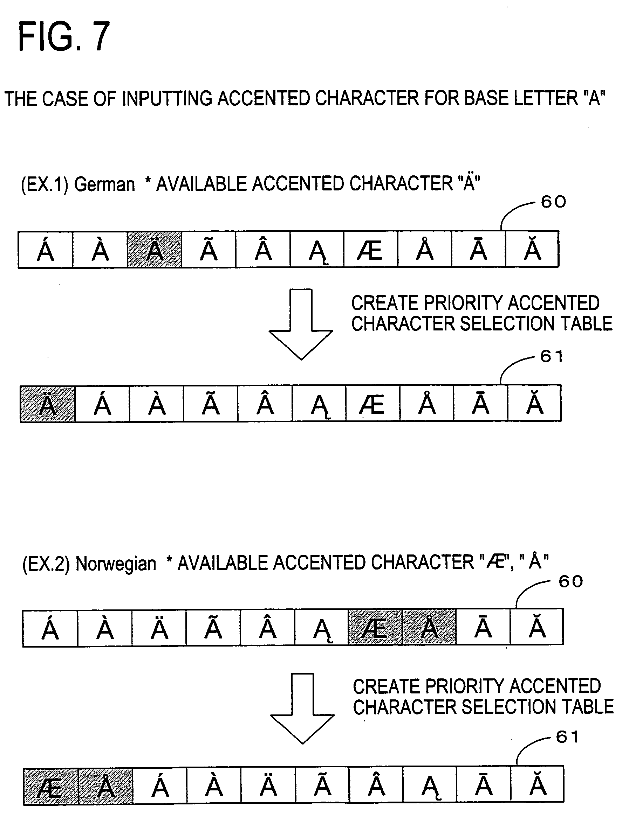

The following explanation will be made with reference to Fig. 7 about the priority accented character selection table 61 which is created when the accent key 21 is pressed and also the currently-set language includes accented characters associated with the base letter input just before the pressing of the accent key 21, the table 61 being then stored in the priority table creation area 57E.

This priority accented character selection table 61 is a table showing a list of accented characters by defining the displaying order to display the accented character candidates used in the currently-set language by giving them higher priority, as mentioned above, based on the standard accented character selection table 60 and the accented characters specified in the priority accented character storage area 56C. The accented character candidates are thus displayed in accordance with the created table. Fig. 7 is an explanatory view showing one example to create the priority accented character selection table 61.

Fig. 7 shows a concrete example of input of an accented character associated with a base letter "A", that is, a state where the accent key 21 is pressed after the letter "A" is input with the corresponding character key 12. In Fig. 7, Example 1 shows a case where "German" is set as the set language and Example 2 shows a case where "Norwegian" is selected as the set language.

The case where "German" is selected will be explained below, referring to Example 1 in Fig. 7. The German language uses an accented character "A with umlaut" associated with a base letter "A". In the priority accented character storage area 56C in the ROM 56, "A with umlaut" is specified as an accented character used in the German language.

When the accent key 21 is pressed, the priority accented character selection table 61 is created to define the order of selecting (displaying on the LCD 5) accented characters by giving a higher priority to the accented character "A with umlaut" associated with the base letter "A" than other accented characters in the standard accented character selection table 60. Specifically, it is defined that "A with umlaut" is put in the leftmost position in the list to be displayed first as a candidate and remaining accented characters are newly arranged in the order defined in the standard accented character selection table 60.

The case where "Norwegian" is selected will be explained below, referring to Example 2 in Fig. 7. The Norwegian language uses accented characters "A with ligature" and "A with ring" associated with a base letter "A". In the priority accented character storage area 56C in the ROM 56, "A with ligature" and "A with ring" are specified as accented characters used in the Norwegian language.

When the accent key 21 is pressed, the priority accented character selection table 61 is created to define the order of selecting (displaying on the LCD 5) accented characters by giving a higher priority to the accented characters "A with ligature" and "A with ring" associated with the base letter "A" than other accented characters in the standard accented character selection table 60. Specifically, it is defined that "A with ligature" is put in the leftmost position in the list to be displayed first and "A with ring" is put in the second position from the left to be displayed following "A with ligature" upon pressing of the accent key 21 or the right portion of cursor key 17. And, remaining accented characters are newly arranged in the order defined in the standard accented character selection table 60.

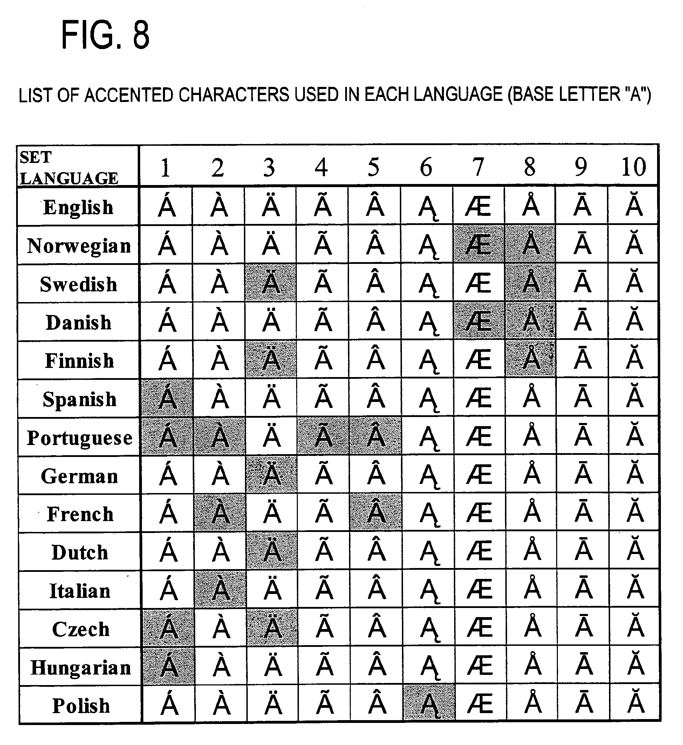

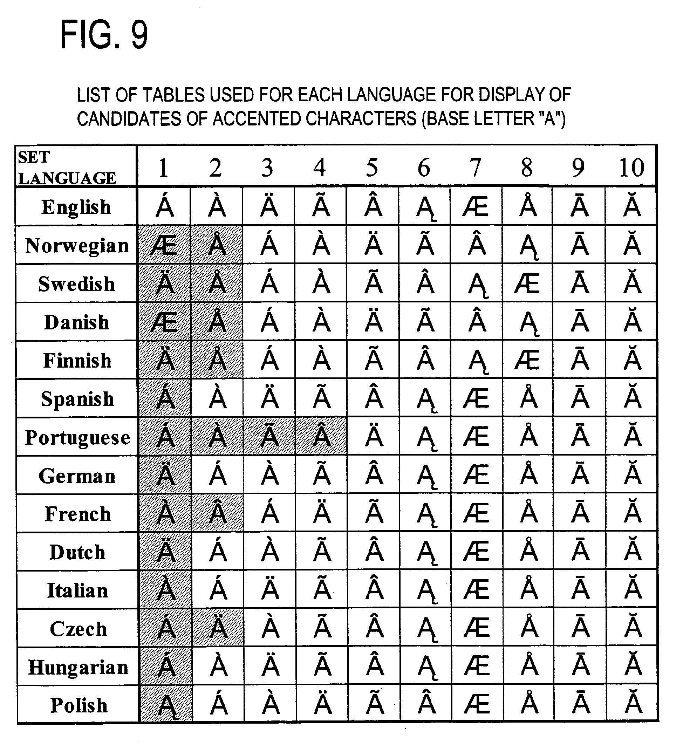

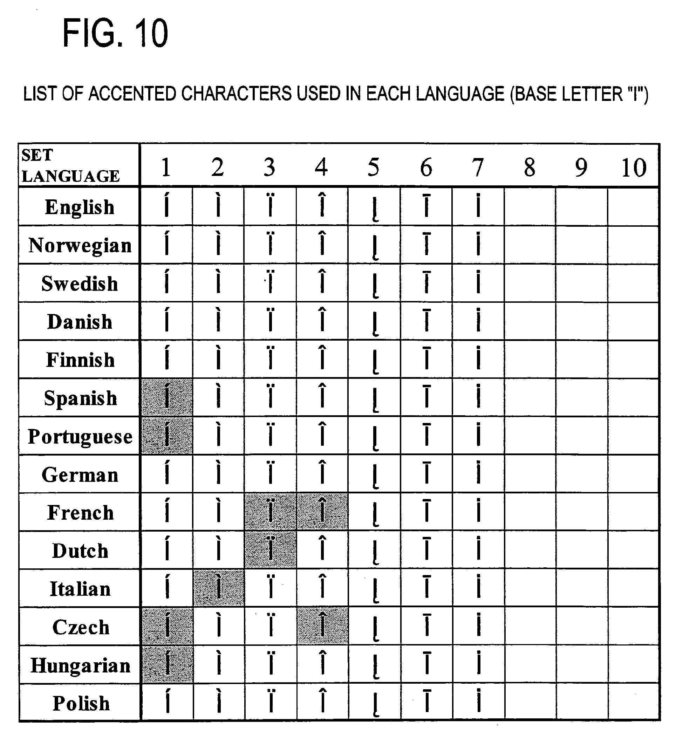

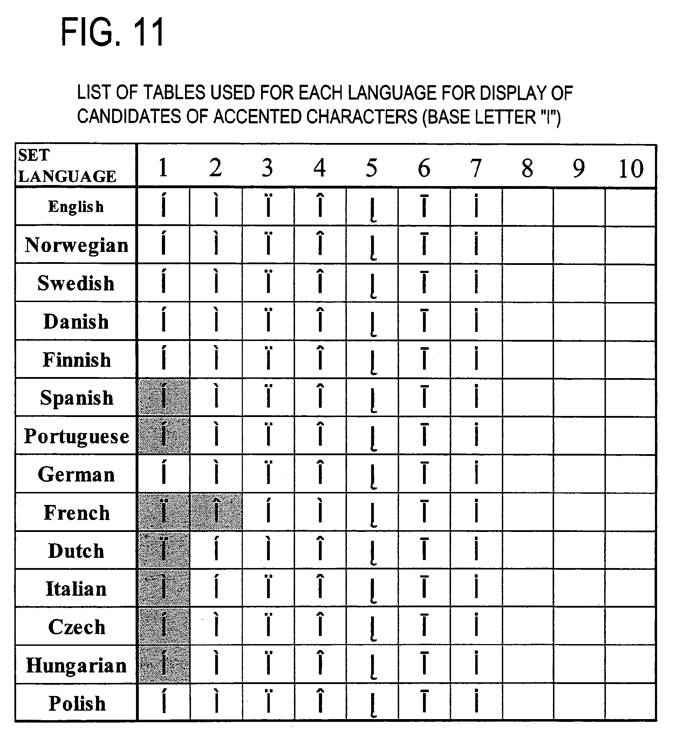

The tables used for displaying available accented characters used in each language will be explained with reference to Figs. 8 through 11, in which the base letters "A" and "I" are exemplified. Fig. 8 is a list of accented characters associated with a base letter "A" used in each language. Fig. 9 is a list of tables to be used for each language to display the candidates of accented characters associated with "A". Similarly, Fig. 10 is a list of accented characters associated with a base letter "I" used in each language. Fig. 11 is a list of tables to be used for each language to display the candidates of accented characters associated with "I".

As shown in Figs. 8 and 10, the accented characters used in each language for each base letter are specified in the priority accented storage area 56C. Upon pressing of the accent key 21 based on the set language, it is determined whether or not the priority accented character selection table 61 is created first (see S23 in Fig. 14).

In other words, the accented characters associated with "A" exist in 13 languages other than "English" as shown in Fig. 8 and thus the priority accented character selection table 61 is created in the above mentioned manner to display the candidates of the accented characters associated with "A" when one of 13 languages is selected. When the set language is "English", the candidates of the accented characters are displayed one by one based on the standard accented character selection table 60, i.e., the uppermost table for "English" as shown in Fig. 9.

On the other hand, accented characters associated with "I" exist in seven languages; Spanish, Portuguese, French, Dutch, Italian, Czech, Hungarian and thus the priority accented character selection table 61 is created in the above manner to display the candidates of the accented characters associated with "I" when one of the above seven languages is selected. When one of languages other than the above seven is selected, the candidates of the accented characters are displayed one by one based on the standard accented character selection table 60, i.e., the corresponding tables as shown in Fig. 11.

If a user wants to input an accented character based on the standard accented character selection table 60 or the priority accented character selection table 61 shown in Figs. 9 and 11, he/she has to take the following steps.

Any one of the character keys 12 corresponding to each alphabet (17 alphabets, "A", "C", "D", "E", "G", "I", "K", "L", "N", "O", "P", "R", "S", "T", "U", "Y", and "Z") which is the base letter associated with at least one or more accented characters is pressed first to input the base letter. The accent key 21 is pressed just after input of the base letter. One accented character associated with the input base letter is displayed in place of the input base letter. When the user further presses the accent key 21 or cursor key 17, other available accented characters are sequentially displayed one by one. The user presses the enter key 19 when the required accented character is displayed, and the input is accepted (See Figs. 14 and 16). The accented character is displayed in uppercase when the base letter is input in uppercase and displayed in lowercase when the base letter is input in lowercase.

Furthermore, all the stored accented characters (see Figs. 5 and 6) are displayed in turn as the candidate on the LCD 5 without reference to the currently-set language. The order of displaying has been defined in the standard accented character selection table 60 or the priority accented character selection table 61 (see Figs. 9 and 11) according to the currently-set language and each base letter. For instance, the order of displaying the accented characters associated with "A" for the set language being "German" is defined to display "A with umlaut" → "A with acute accent" → "A with grave accent" → "A with tilde" → ...... according to the created priority accented character selection table 61.

It is to be noted the above mentioned method of inputting the accented characters will be explained later in detail with reference to a flowchart later.

Next, relating to the tape printer 1 structured as above in the present embodiment, control processing such as language setting and input of accented characters will be explained with reference to Figs. 12 through 14. Fig. 12 is a flowchart of a main system control program of the tape printer 1. Each program shown in the flowcharts in Figs. 12 through 14 is stored in a storage area such as the ROM and is executed by the CPU 51.

As shown in Fig. 12, in step (hereinafter, "S") 1, the CPU 51 of the tape printer 1 first performs initialization processing. Specifically, the text memory 57A, the printing buffer 57B, the counter 57C, the priority table creation area 57E, and others are initialized. However, the setting language storage area 57D is not initialized so that the data is read out from this area 57D in the initial language setting processing in S2 mentioned later.

In S2, the CPU 51 executes the initial language setting processing. In this initial language setting processing, to be concrete, the language code stored in the setting language storage area 57D of the RAM 57 is read. Based on this read language code, the language to be used in the tape printer 1 is selected from among "English", "Norwegian", "Swedish", "Danish", "Finnish", "Spanish", "Portuguese", "German", "French", "Dutch", "Italian", "Czech", "Hungarian", and "Polish". Thus, the tape printer 1 can be brought into use in the same language as the language selected at the end of previous use.

In S3, the CPU 51 determines whether or not any key (see Figs. 2) on the keyboard 24 constituting the front face part of the device body has been pressed. If no key has been pressed (S3: No), the CPU 51 waits ready until any key is pressed.

When any key has been pressed (S3: YES), the CPU 51 executes determination processing in S4 to first determine whether or not the accent key 21 has been pressed. If the accent key 21 has been pressed (S4: YES), the flow advances to determination processing in S8.

If the accent key 21 has not been pressed (S4: NO), the CPU 51 determines in S5 whether or not the function key 20 has been pressed. If the function key 20 has been pressed (S5: YES), the flow advances to language setting processing in S7.

Furthermore, if the function key 20 has not been pressed (S5: NO), the CPU 51 executes other types of processing corresponding to the pressed key, such as inputting the corresponding character, printing the input character onto a tape, changing a character size, and changing a font, and then executes processing in S3 and subsequent processing again.

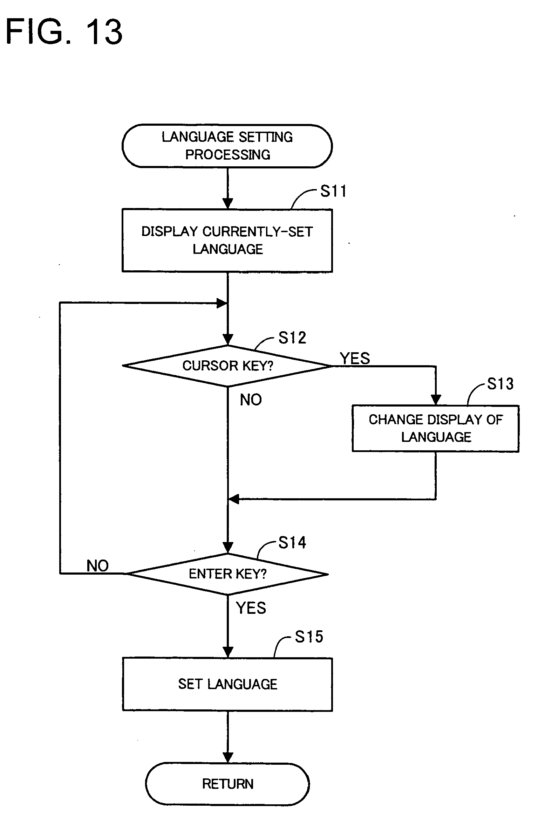

In S7, the language setting processing shown in Fig. 13 is performed. This language setting processing is the processing for changing from the currently-set language in the tape printer 1 to another language as will be mentioned later. The tape printer 1 in the present embodiment is configured to display the accented characters available for the set language with higher priority than other accented characters irrelevant to the set language to input a required accented character (S25). Various messages (e.g. a message informing that a remaining quantity of battery comes to an end or an error occurs) can be displayed in the set language on the LCD 5. After termination of the language setting processing, the flow returns to the determination processing in S3. The processing in S3 and subsequent processing will be executed again.

In the determination processing in S8, on the other hand, it is determined whether or not the base letter just input is a base letter associated with at least one accented character. In the tape printer 1 in the present embodiment, all the accented characters used in 13 languages, other than "English" using no accented character, of 14 languages selectable in S7, are stored in association with each base letter (See Figs. 5 and 6). The base letters however include 18 base letters associated with no accented character, namely, "B", "F", "H", "J", "M", "Q", "V", "W", "X", "b", "f", "h", "j", "m", "q", "v", "w", and "x". If the base letter just input corresponds to one of the above 18 base letters associated with no accented character (S8: NO), the flow returns to the determination processing in S3 without performing input processing of accented character, and the processing in S3 and subsequent processing are executed again.

In contract, if the base letter input just before the pressing of the accent key 21 corresponds to one of the base letters associated with any accented characters (S8: YES), accented character input processing in Fig. 14 is performed (S9). In this accented character input processing, the accented characters associated with the base letter just input are displayed on the LCD 5 in the order defined according to each set language (see Fig. 16). After termination of the accented character input processing, the flow returns to the determination processing in S3, and the processing in S3 and subsequent processing are executed.

The language setting processing which is executed in S7 will be explained with reference to Fig. 13. This language setting processing is the processing for changing the currently-set language in the tape printer 1 to another language, as mentioned above. Fig. 13 is a flowchart of a language setting processing program of the tape printer 1 in the present embodiment.

In the language setting processing, at first, the name of language currently set in the tape printer 1 is displayed in that set language in S11. For instance, if the English language has been set, the word "English" representing the English language is displayed. If the Norwegian language has been set, the word "Norsk" representing the Norwegian language is displayed. Furthermore, if the Swedish language has been set, the word "Svensk" representing the Swedish language is displayed. The same applies to other languages and thus explanation thereof is omitted herein.

In S12, subsequently, it is determined whether or not the cursor key 17 has been pressed. If the cursor key 17 has been pressed (S12: YES), the language name currently displayed on the LCD 5 is changed to another language name. To be concrete, if the right portion of cursor key 17 is pressed, the language name is changed from top down in Fig. 8 (in the order of ··· → "English" → "Norsk" → "Svensk" → ···). Alternatively, if the left portion of cursor key 17 is pressed, the language name is changed from bottom up in Fig. 8 (in the order of ··· → "Svensk" → "Norsk" → "English" → ···).

If it is determined that the cursor key 17 has not been pressed (S12: NO), it is then determined whether or not the enter key 19 has been pressed (S14). If it is determined that the enter key 19 has been pressed (S14: YES), the language corresponding to the language name displayed on the LCD 5 at that time is newly selected as the set language in the tape printer 1 (S15). If it is determined that the enter key 19 has not been pressed (S14: NO), in contrast, the flow returns to the determination processing in S12.

One example of a display screen of the LCD 5, which is executed in the language setting processing in S7, will be explained in detail with reference to Fig. 15. Fig. 15 shows one example of changing the set language from "English" to "German".

Upon pressing of the function key 20, a language selection display screen 80 for allowing selection of languages is first displayed on the LCD 5 as shown in Fig. 15. In this display screen 80, the word "English" representing the English language is first displayed on the LCD 5 in English currently set.

Thereafter, the user presses the cursor key 17 to change the displayed language name in turn. The language name to be displayed is changed in the predetermined order mentioned above by pressing the right or left portion of the cursor key 17. The language name is displayed in the displayed language.

The user stops operating the cursor key 17 at the time when the German word "Deutsch" representing the German language is displayed in the language selection display screen 80, and then presses the enter key 19 to select the German language as a newly-set language. After completion of the setting, the language selection display screen 80 of the LCD 5 is switched to a language setting completion display screen 81 which shows the completion of language setting. On this display screen 81, a message "Alles klar!" in German newly set, representing the completion of the setting, is displayed. Then, the display screen 81 is switched to a normal screen for input of characters.

The accented character input processing which is executed in S9 will be explained with reference to Fig. 14. This accented character input processing is the processing for input of the accented characters associated with the base letter just input as mentioned above. Fig. 14 is a flowchart of the accented character input processing program in the tape printer 1 in the present embodiment.

In the accented character input processing, as shown in Fig. 14, the CPU 51 first determines the currently-set language in S21. Herein, the tape printer 1 in the present embodiment includes 14 selectable languages, one of which is set or changed in the above mentioned processing in S2 and S7. The currently-set language is identified by the language code stored in the set language storage area 57D of the RAM 57. Accordingly, in the processing in S21, the language code stored in the set language storage area 57D is read and the type of the language is specified.

In S22, it is subsequently determined which base letter has been input with the character key 12 just before pressing of the accent key 21, from among 34 base letters; "A", "C", "D", "E", "G", "I", "K", "L", "N", "O", "P", "R", "S", "T", "U", "Y", "Z", "a", "c", "d", "e", "g", "i", "k", "l", "n", "o", "p", "r", "s", "t", "u", "y", and "z" other than the letters associated with no accented character. Based on determination results in S21 and S22 mentioned above and the accented characters specified in the priority accented character storage area 56C, it is determined whether or not the currently-set language includes accented characters associated with the base letter just before the pressing of the accent key 21 (S23).

If it is determined that there is no available accented character (S23: NO), the flow advances to S25. If it is determined that there are available accented characters (S23: YES), in contrast, the priority accented character selection table 61 to be used for displaying the accented characters is created based on the type of the currently-set language, the base letter just input, the standard accented character selection table 60, and the accented characters specified in the priority accented character storage area 56C (S24). This creation of the priority accented character selection table 61 is already explained in Fig. 7 and thus the explanation thereof is omitted herein.

In S25, based on the standard accented character selection table 60 or the priority accented character selection table 61 if created in S24, the accented character defined as a first one in the displaying order (i.e., the accented character defined as the leftmost one in the table (see Figs. 9 and 11)) is displayed on the LCD 5 in place of the base letter just input.

In S26, it is determined whether or not the enter key 19 has been pressed. If the enter key 19 has been pressed (S26: YES), the accented character currently displayed on the LCD 5 is accepted for input (S27). After that, this accented character input processing is terminated and the flow returns to the main flowchart.

If the enter key 19 has not been pressed (S26: NO), in contrast, it is further determined whether or not the accent key 21 has been pressed (S28). If it is determined that the accent key 21 has been pressed (S28: YES), it is determined whether or not the number of candidates of accented characters associated with the base letter just input is one (S29). As shown in Figs. 5 and 6, the accented characters are associated with 34 base letters respectively. Of those letters, however, 4 base letters; "K", "k", "P", and "p" are each associated with a single accented character. Consequently, if one of the 4 base letters; "K", "k", "P", and "p" is just input, the candidate of accented character is only one.

If it is determined in S29 mentioned above that the candidate of accented character is one (S29: YES), indicating that there is no candidate of accented character other than the currently displayed accented character, the flow returns to the determination processing in S26 without displaying another accented character as a candidate. If it is determined that the candidate of accented character is not one (S29: NO), a next accented character is displayed as a candidate on the LCD 5 in place of the currently displayed accented character (S30). Note that the displaying order is defined as described above depending on the set languages based on the standard accented character selection table 60 or the priority accented character selection table 61 (see Figs. 9 and 11). The accented characters are displayed in turn from a left one in each table. The flow then returns to the determination processing in S26.

If it is determined that the accent key 21 has not been pressed, it is then determined whether or not the cursor key 17 has been pressed (S31). If it is determined that the cursor key 17 has been pressed (S31: YES), it is determined as in S30 whether or not the number of candidates of accented characters associated with the base letter just input is one (S32).

Subsequently, if it is determined that the candidate of accented character is one (S32: YES), indicating that there is no candidate of accented character other than the currently displayed accented character, the flow returns to the determination processing in S26 without displaying another accented character as a candidate.

If it is determined that the candidate of accented characters is not one (S32: NO), a next accented character is displayed as a candidate on the LCD 5 in place of the currently displayed accented character (S33). Note that the displaying order is defined as described above depending on the set languages based on the standard accented character selection table 60 or the priority accented character selection table 61 (see Figs. 9 and 11). When the right portion of cursor key 17 is pressed, the subsequent candidates of accented characters are displayed in turn as in the case that the accent key 21 is pressed in S30. When the left portion of cursor key 17 is pressed, on the other hand, the subsequent candidates of accented characters are displayed in turn in reverse order to when the accent key 21 is pressed. The flow then returns to the determination processing in S26.

If it is also determined that the cursor key 17 has not been pressed (S31: NO), the flow returns to the determination processing in S26.

As described above, in the accented character input processing in the present embodiment, the accented characters relevant to the set language are displayed with higher priority than other accented characters. This makes it possible to promptly display a required accented character. Accordingly, the required accented character can be input quickly and easily.

One example of the display screen of the LCD 5, which is executed in the accented character input processing in S9, will be explained concretely with reference to Fig. 16. Fig. 16 shows an example of inputting an accented character "a with umlaut" following the word "Wie spa" in the case where the set language is German.

As shown in Fig. 16, in a normal character input screen 82, an uppercase input mode is established with the Caps key 14, and a letter "W" is first input with the corresponding character key 12. A lowercase input mode is then established with the Caps key 14. Letters "i" and "e" are input, the space key 13 is pressed, and further letters "s", "p", and "a" are input. After that, upon pressing of the accent key 21, the input screen 82 is switched to the accented character candidate display screen 83 and the cursor 16 appears under the letter "a". Among the accented characters associated with the base letter "a", the accented character "a with umlaut" defined to be displayed first in the created priority accented character selection table 61 (S24) is displayed on the LCD 5 in place of the letter "a" (S25).

If the user operates the accent key 21 or cursor key 17 in this state, "a with umlaut" is changed to another accented character. The order of displaying the accented characters as the candidate has been defined in the created priority accented character selection table 61.

At the time when "a with umlaut" is displayed on the accented character candidate display screen 83, the user stops operating the accent key 21 or cursor key 17 and then presses the enter key 19 to complete input of "a with umlaut". After completion of the input, the display screen 83 of the LCD 5 is returned to the normal character input screen 82, allowing subsequent character input with the character keys 12.

As described above, in the tape printer in the present embodiment, when accented characters exist in the preset language (S2, S27), the priority accented character selection table 61 is created for input of a required accented character so as to define that the accented characters available for the preset language are displayed with higher priority than other accented characters (S24). Based on the created priority accented character selection table 61, the candidates of accented characters are displayed in turn on the LCD 5. This makes it possible to allow input of accented characters in plural languages and also prompt selection of accented characters according to the frequency of use by a user. It is further possible to ensure versatility of the device with respect to the types of languages and also enable quick and easy input of accented characters. Further, a required accented character can be input promptly with the accent key 21. After a base letter associated with no accented character is input, any accented character is not displayed even if the accent key 21 is pressed. This makes it possible to prevent input errors and allow precise input of characters.

Furthermore, the priority accented character selection table 61 is created to define that the accented characters relevant to the set language are displayed with higher priority than other accented characters. It is therefore unnecessary to create character tables corresponding to all languages. With the priority accented character selection table 61 created as needed, a required accented character is displayed and input. Consequently, only a minimum storage capacity is required for inputting accented characters relevant to plural languages.

The present invention may be embodied in other specific forms without departing from the essential characteristics thereof.

For instance, the tape printer 1 in the present embodiment is structured to sequentially display the candidates of accented characters one by one on the LCD 5 every time the accent key 21 is pressed. Alternatively, all the candidates of accented characters may be displayed at the same time so that a user selects a required one by moving the cursor 16 right and left with the cursor key 17. At that time, when the accented character defined to be displayed with the highest priority is displayed at the leftmost position, the user is allowed to input the required accented character quickly.

In the present embodiment, furthermore, the priority accented character selection table 61 is created every time the accent key 21 is pressed to display the candidates of accented characters. As an alternative, available priority accented character selection tables 61 may all be stored in advance in the ROM 56 so that a desired one is simply selected upon pressing of the accent key 21. This makes it possible to reduce burden of processing.

While the presently preferred embodiment of the present invention has been shown and described, it is to be understood that this disclosure is for the purpose of illustration and that various changes and modifications may be made without departing from the scope of the invention as set forth in the appended claims.

## Claims

1. A character input device (1) comprising:
a plurality of character keys (12) for inputting characters;
a display screen (5) for displaying the characters input with the character keys (12);
accented character display means (53, 65) for displaying an accented character having an accent mark on the display screen (5); and
character selection means (53) for selecting a required accented character from the accented character(s) displayed by the accented character display means (53, 65);
**characterized in that**
the character input device further comprises:
character storage means (56, 57) for storing accented characters used in languages of a plurality of countries; and
language selection means (53) for selecting a required language from the languages; and
the accented character display means (53, 65) displays an accented character relevant to the selected language by the language selection means (53), with higher priority than other accented characters stored in the character storage means (56, 57).

2. The character input device according to claim 1, wherein
the accented character display means (53, 56) displays the accented characters one by one by changing them sequentially, and displays the accented character(s) relevant to the selected language by the language selection means with higher priority than the accented characters irrelevant to the selected language.

3. The character input device according to claim 1 or 2,
wherein the device further comprises:
an accent key (21); and
character determination means (53) for determining, upon of pressing of the accent key (21) following input of a base letter having no accent mark with the character key (12), whether or not there is an accented character associated with the base letter just input, and
when the character determination means (53) determines that there is the accented character, the accented character display means (53, 65) displays the accented character associated with the just input base letter on the display screen (5).

4. The character input device according to any of claims 1 to 3, wherein
the device further comprises accented character table creating means (53) for creating an accented character table (61) defining that the accented character(s) associated with the just input base letter and with the selected language by the language selection means (53) is displayed on the display screen (5) with higher priority than other accented characters, and
the accented character display means (53, 65) displays the accented character(s) based on the accented character table (61) created by the accented character table creating means (53).
